# EUROPEAN PATENT SPECIFICATION

(11) **EP 2 152 936 B1**
(45) Date of publication and mention of the grant of the patent: **18.04.2018**
(21) Application number: 08750021.1
(22) Date of filing: 05.05.2008
(51) Int. Cl.: C23C 28/04, C23C 30/00, B23B 5/00, B23B 27/14

(54) **CUTTING TOOL**
SCHNEIDWERKZEUG
OUTIL DE COUPE

(30) Priority: 16.05.2007 US 749498
(43) Date of publication of application: 17.02.2010
(73) Proprietor: Oerlikon Surface Solutions AG, Pfäffikon, 8808 Pfäffikon SZ (CH)
(72) Inventor: QUINTO, Dennis, Wheatfield, New York 14120 (US); WOHLRAB, Christian, A-6800 Feldkirch (AT); RAMM, Juergen, CH-7304 Maienfeld (CH)
(74) Representative: Troesch Scheidegger Werner AG
(86) International application number: PCT/EP2008/055455
(87) International publication number: WO 2008/138789

(56) References cited:
- EP-A- 0 947 607
- EP-A- 1 122 010
- EP-A- 1 553 210
- EP-A- 1 717 347
- EP-A- 1 772 217
- WO-A-92/05009
- WO-A-97/03777
- WO-A-2006/103899
- JP-A- 2001 347 403
- JP-A- 2004 122 264
- JP-A- 2006 192 531
- US-A1- 2004 121 147

## Description

### Technical Field

The present invention relates to the field of coated sharp-edged cutting tools made of or comprising a sintered body embracing at least a hard material and a binder material which has been sintered under temperature and pressure to form the body. Cutting tools comprise, e.g., tools for milling (milling tools), turning tools, indexable inserts, gear cutting tools, hobs, shank type tools, tool for threading, tapping tools.

### Background of the Invention

With past and current sintering technology of powder metallurgy, cemented carbide cutting tools have been used both in uncoated and in CVD (chemical vapor deposition) and PVD (physical vapor deposition) coated conditions. CVD coating processes including MT-CVD (moderate temperature CVD or medium temperature CVD) coating processes need high temperatures, usually above 950°C for HT-CVD (high temperature CVD) or between 800° C and 900° C for MT-CVD, and a chemically aggressive process atmosphere. This has, amongst others, well known drawbacks with reference to transverse rupture strength (TRS) and low edge strength of the cutting tools as well as to unavoidable thermal cracks of the coating.

A closer look to the drawbacks of HT-CVD should be given in the following with the coating of cemented carbides taken as an example:
a) As mentioned before, reduction of TRS of the substrate may be due to the fact that the state of the surface prior to coating is one of residual compressive stress induced by the correct grinding process, which is beneficial; this state is altered by high temperature which relieves this beneficial residual compressive stress. Therefore, independent of the coating, high temperature annealing has this effect on the carbide substrate. However, even if the substrate is not properly ground - for instance, if it is subjected to "abusive grinding" which leaves residual tensile stress or even some surface cracks - the high temperature treatment has essentially no beneficial effect.
b) A further reduction of the TRS of the coated tool originates from the presence of thermal cracks induced by thermal expansion mismatch between the coating and substrate upon cooldown from the high CVD temperature. The cracks run through the thickness of the coating, and thus can initiate fatigue failure under certain cutting conditions.
c) In the case of WC-Co hardmetals, it is also known that cobalt diffuses towards the surface with temperatures of about 850° C and above, which is also associated with decarburization and eta phase formation during the CVD process. Such eta phase can e.g. be formed by the decarburization of the outer region of the substrate in the initial formation of TiC or TiCN CVD first layer which is the usual underlayer for CVD Al₂O₃ coating layer. The eta phase region forms an embrittled layer of high porosity, again causing micro-cracking initiation sites as well as coating delamination tendency. At least this drawback of HT-CVD has been overcome with MT-CVD e.g. by applying a first TiCN layer at about 850° C, thereby minimizing substrate eta phase formation.

Therefore, different measures have been taken to diminish such detrimental effects. US 4,610,931 suggests to use cemented carbide bodies having a binder enrichment near the peripheral surface. In US 5,266,388 and US 5,250,367, application of a CVD coating being in a state of residual tensile stress followed by a PVD coating being in a state of residual compressive stress has been suggested for the mentioned binder enriched tools.

Despite the fact that cemented carbides have been used to illustrate the drawbacks of CVD coating processes above, the same or at least similar problems are known from other substrates having sintered bodies. Cermets also have Co, Ni (and other metals like Mo, Al, ...) binders and undergo a sintering process similar to cemented carbides. TiCN-based cermets e.g. are not as readily CVD-coated today since these substrates are more reactive with the coating gas species, causing an unwanted reaction layer at the interface. Superhard CBN tools use high-temperature high-pressure sintering techniques different from that used for carbides and cermets. However, they may also have metallic binders such as Co, Ni,... tending to high temperature reactions during CVD coating processes. These substrates are sometimes PVD-coated with TiN, TiAlN, CrAlN or other coating systems mostly for wear indication at the cutting edges. Such coatings however can only give a limited protection against high temperature and high oxidative stress caused by high cutting speeds applied with state of the art turning machines for example.

Ceramic tool materials based on solid Al₂O₃, Al₂O₃-TiC; or Al₂O₃ -Si₃N₄ (SiAlON) that incorporate glassy phases as binders represent another tool type: tools which are electrically insulating and therefore difficult to coat also with conventional PVD. These materials are sinter-HIPped (HIP: hot isostatic presssing), as opposed to lower-pressure sintered carbides. Such ceramic inserts again are not CVD coated because high temperature can cause softening of the Si₃N₄ substrate or cause it to loose some toughness as the amorphous glassy binder phase becomes crystalline. Uncoated materials however can allow interaction during metal cutting between their binder phases and the workpiece material and therefore are susceptible to cratering wear restricting use of such tools to limited niche applications.

Therefore, PVD coatings have replaced CVD coatings partially or even completely for many operations with high demands on tool toughness or special needs on geometry. Examples for such tools are tools used for interrupted cut applications like milling or particularly sharp-edged threading and tapping tools. However, due to outstanding thermochemical resistivity and hot hardness, oxidic CVD-coatings such as, e.g. Al₂O₃ in α- and/or γ-crystal structure, or thick multilayers comprising such coatings, are still in widespread use especially for rough-medium turning, parting and grooving applications in all types of materials and nearly exclusively with turning of cast iron. Such coatings could not be produced by PVD processes until recently due to principal process restrictions with electrically insulating materials and especially with oxidic coatings.

As is well known to those skilled in the art, all the problems mentioned above tend to occur and focus on the cutting edge becoming more acute with the smaller radius of the cutting edge. Therefore, to avoid edge chipping or breaking with CVD coated tools, additional geometrical limitations have to be considered for cutting edges and tool tips, with cutting edges limited to a minimum radius of 40 µm for cemented carbides for example. Additionally, further measures like applying a chamfer, a waterfall, a wiper or any other special geometry to the clearance flank, the rake face or both faces of the cutting edge are commonly used but add another often complex-to-handle production step to manufacturing of sintered tool substrates.

Document JP 2006 192531 A discloses a cutting tool comprising a first and second coats formed by a physical vapor deposition.

### Summary of the Invention

It is therefore an object of the invention to provide a method of manufacturing a single or a multilayer PVD coated sharp edged cutting tool, which can at the same time exhibit satisfactory wear and thermochemical resistance as well as resistance to edge chipping. It is further object to provide a cutting tool manufactured by the proposed method. The method for manufacturing a cutting tool comprises providing a sintered body made of a cemented carbide, a CBN, a cermet or a ceramic material having a cutting edge with an edge radius Rₑ smaller than 40 µm, a flank and a rake face, and depositing a single or a multilayer coating consisting of a PVD coating comprising at least one oxidic PVD layer on at least parts of the surface of the sintered body, deposited by cathodic arc evaporation.

In one embodiment, the edge radius Rₑ is smaller than or equal to 30 µm. The covered parts of the surface comprise at least some parts of the sharp edge of the sintered body. It should be mentioned that if after sharpening of the tool there is not any posttreatment like honing, blunting or the like applied, an edge radius Rₑ
equal or even smaller than 20 µm can be fabricated on sintered tools. Also these tools can be coated beneficially with oxidic PVD coatings as there is not any harmful influence of the coating process, and weakening of the cutting edge does not occur.

The coating is free of thermal cracks and does not contain any halogenides or other contaminations deriving from CVD process gases. Additionally, the coating or at least the oxidic PVD layer can be free of inert elements like He, Ar, Kr and the like. This is effected by vacuum arc deposition in a pure reactive gas atmosphere. As an example for a multilayer coating, deposition of an adhesion layer and or a hard, wear protective layer can be started in a nitrogen atmosphere followed by a process step characterized by growing oxygen flow to produce a gradient towards the oxidic coating accompanied or followed by a ramp down or shut down of the nitrogen flow. Applying a small vertical magnetic field over a surface area of the cathodic arc target may be beneficial in case of highly insulating target surfaces formed e.g. by arc processes under pure oxygen atmosphere. Detailed instructions how to perform such coating processes can be found in applications WO 2006-099758, WO 2006-099760, WO 2006-099754, as well as in CH 1166/03 which hereby are incorporated by reference to be a part of the actual disclosure.

The oxidic layer will preferably incorporate an electrically insulating oxide comprising at least one element selected from the group of transition metals of the IV, V, VI group of the periodic system and Al, Si, Fe, Co, Ni, Y, La. (Al₁-ₓCrₓ)₂O₃ and Al₂O₃ are two important examples of such materials. Crystal structure of such oxides can vary and may comprise a cubic or a hexagonal lattice like an alpha (α), beta (β), gamma (γ), delta (δ) phase or a spinel-structure. For example, oxide layers comprising films of different oxides can be applied to the tool. Despite of the fact that multilayer coatings may comprise nitrides, carbonitrides, oxinitrides, borides and the like of the mentioned elements having sharp or graded transfer zones between defined layers of different elemental or stochiometric composition, it should be mentioned that best protection against high temperature and/or high oxidative stress can be ensured only by a coating comprising at least one layer consisting of essentially pure oxides.

Forming a thermodynamically stable phase, the corundum type structure which for example can be of the type Al₂O₃, (AlCr)₂O₃, (AlV)₂O₃ or more generally of the type (Mel₁₋ₓMe2ₓ)₂O₃, with 0.2 ≤ x ≤ 0.98 and Me1 and Me2 being different elements from the group Al, Cr, Fe, Li, Mg, Mn, Nb, Ti, Sb, V, will be a preferred embodiment of the oxidic layer. Detailed instructions how to create such corundum type single or multilayered structures can be found in application CH 01614/06 which hereby is incorprated by reference.

In an embodiment of the invention, the coating comprises an adhesion layer situated directly on the body surface, and/or at least one hard wear protective layer situated between the body and the oxidic layer or between two or more consecutive oxidic layers and/or on top of the coating layers. The adhesion layer as well as the wear protective layer therein preferably comprises at least one element of the group of a transition metal from group IV, V, VI of the periodic system of the elements and of Al, Si, Fe, Ni, Co, Y, La. The compunds of the wear protective layer will further comprise N, C, O, B or a mixture thereof, wherein N, C and CN are preferred. Examples of such wear protective layers are TiN, TiC, CrN, CrC, TiAlN, CrAlN, TiCrAIN as well as TiCN, CrCN, TiAlCN, CrAlCN, TiCrAlCN.

Compounds of the adhesion layer may comprise N, C, O or a mixture thereof, wherein N and O is preferred. Examples of such adhesion layers are TiN, CrN, TiAlN, CrAlN, TiCrAlN or TiON, CrON, TiAlON, CrAlON, TiCrAlON. The thickness of the adhesion layer will be preferably between 0.1 and 1.5 µm. If the adhesion layer comprises a thin metallic layer situated directly on the body surface, the thickness of the metallic layer should be between 10 and 200 nm for an optimized tool-to-coating bond. Examples of such metallic interlayers are Ti, Cr, TiAl or CrAl. Overall coating thickness will be between 2 and 30 µm, and due to economy of the coating process in most cases rather between 3 to 10 µm. However, it should be mentioned that in principle, tools can be provided with even thicker coatings if there is a need for some special applications which might be high speed turning in cast iron, for example.

Another embodiment of the invention may encompass a wear protective layer comprising at least one composition-segregated film embracing a phase having a relatively high concentration of a specific element fostering phase segregation of crystal structures like Si or B for example, and a phase having a relatively low concentration of such a specific element. In one embodiment, the phase having a relatively high concentration of the specific element constitutes an amorphous or microcrystalline phase. Such films will preferably comprise a nitride or carbonitride of a combination of Cr and Si or of Ti and Si.

All layers may be deposited according to the actual needs with sharp or gradient layer-to-layer transition zones forming coatings showing a discrete or a gradient layer structure. Thickness of layers may be chosen from several micrometers down to a few nanometers if such structures should be preferable for specific applications.

Contrary to cutting tools comprising oxidic CVD layers, such PVD coated tools need no binder-enriched substrates to minimize the adverse effect of the CVD process to the TRS (transverse rupture strength) of the sintered body. Low process temperatures with PVD processes and the possibility to apply coatings or certain layers, in particular the before-mentioned wear protective layers, in a state of compressive stress proved to be useful measures against crack propagation and the risk of edge chipping. Therefore, there is no longer use for binder-enriched substrates for the majority of the actual cutting applications, which is an evident simplification for carbide tool production.

However, under certain cutting conditions, even PVD coated enriched carbide grades might be useful, for example if cutting parameters should be extended such that higher feed force is applied and an even higher TRS would be preferred.

Due to the potential higher TRS of such PVD coated hardmetal grades, not only cutting tools having a very small edge radius but also cutting tools having a smaller nose radius or point angle can be produced for special fine tooling applications. As an example, compared to conventional cemented carbide inserts having common nose radii of minimal 0.2 mm (0.008 inch) to 2.4 mm (0.094 inch), even radii like 0.15, 0.10, 0.05 and 0.01 mm could be coated and tested under usual fine turning conditions without signs of premature tip chipping.

Due to inherent "geometric" properties of PVD processes, a further coating feature can be given to certain sintered bodies of simple geometry - as e.g. inserts - solely by using defined fixturing systems, thereby exposing certain areas of the body to a "direct" ions and/or neutrals flow - in the following referred to as particle flow - from the arc or sputter source, whereas other areas are essentially hit by grazing or indirect incident only. In this context "direct" means that an essential part or the makority of the particles emitted by the arc source hit the surface in an angle of about 90±15°. Therefore, layer growth on such areas is faster than growth on areas exposed to a substantially "indirect" particle flow. This effect can be used to apply coatings of varying thickness during one PVD coating process; which is completely different from CVD processes providing a uniform coating thickness on every surface independent of geometric effects due to different substrate/source positioning.

For example, using a threefold rotating spindle to fix center holed square 13x13x5 mm inserts alternating with 8 mm spacers, a ratio of the flank face thickness (d_{Flank}) and the rake face thickness (d_{Rake}) of about 2±0.5 could be adjusted for the inserts over the whole length of the substrate carousel of about 500 mm in a commercial Oerlikon coating unit of the RCS type, or of a length of about 900 mm in a commercially available Oerlikon BAI 1200 coating unit. Thickness measurements were made in the middle of the flank face and, for the rake face, at the bisecting line connecting two opposite noses of the insert in 2 mm distance from the cutting edges defining the point angle of the nose.

Such inserts having a quotient Q_{R/F} = d_{Rake} / d_{Flank} < 1, where d_{Rake} is the overall coating thickness on the rake face and d_{Flank} is the overall coating thickness on the flank face, are particulary convenient for milling tools which due to impact stress during milling operations profit from a higher PVD coating thickness on the flank face. This effect is intensified by PVD coatings having a high residual stress which can be controlled by process parameters like substrate bias, total pressure and the like.

Contrary to milling, wear resistance of turning operations benefits from a higher coating thickness on the rake face due to the high abrasive and thermochemical wear caused by the passing chip. Therefore, in this case, quotient Q_{R/F} should be higher than one: Q_{R/F} = d_{Rake} / d_{Flank} > 1. As for inserts, such a coating distribution can be produced by fixtures exposing the rake phase to direct particle flow of the arc or sputter source. Two-fold rotating magnetic fixtures, for example, can be used to expose a rake face of cemented carbide inserts directly to the source. This magnetic fixture results in additional thickness enhancement at the cutting edge which can be influenced by process parameters like substrate bias and can be utilized to improve the tool performance. For non-magnetic cutting plates, clamping or hooking fixtures can be used as required. Furthermore, for turning tools, a coating design comprising a wear protective layer made of TiN, TiC or TiCN, TiAlN or TiAlCN, AlCrN or AlCrCN situated between the body and the oxidic layer proved to be particularly effective.

Cutting tools according to the invention are applicable to a large variety of different workpiece materials as for instance all types of metals, like nonferrous metals but especially ferrous metals, cast iron and the like. Special tools for milling or turning of such materials can be optimized as mentioned above. This makes PVD coatings a serious competitor to up-to-date CVD coatings even in until now untouched CVD fields like turning operations especially roughing and high speed finishing of steels and cast irons. In many cutting applications, tools having an oxidic layer as the outermost layer of the coating system proved to be the best solution. This refers especially to gear cutting tools, hobs or different types of shank type tools including indexable shank type tools.

The following examples - that are out of the scope of the claimed invention since they have greater cutting edge radii than those of the invention-are intended to demonstrate beneficial effects of some aspects of the invention with some special tools and coatings and are not intended in any way to limit the scope of the invention to such special examples. It should be mentioned that several tests have been performed in comparison to well-known applications where PVD coated tools are known to outperform CVD coatings for a long time as e.g. with threading and drilling in different types of metal materials, for dry and wet milling of non-ferrous materials, as well as for certain milling and turning applications on steel or super alloys. For such steel milling, low or medium speed up to 100 m/min but up to high feed rates from 0.2 till 0.4 mm/tooth has been applied. In most cases, tools according to the invention performed as well as or even better than well-known TiCN or TiAlN based PVD coated tools. However, one focus of the invention was to substitute CVD coatings in applications of high thermochemical and/or abrasive wear as for instance with high speed milling of iron, steel and hardened materials as well as turning of steel, iron, as e.g. cast iron, superalloys and hardened materials.

PVD coatings of the following examples have been deposited by a cathodic arc process; deposition temperature was between 500°C with comparative TiCN coatings and 550°C for oxidic coatings. For oxidic PVD coatings, substrate bias has been pulsed and a small vertical magnetic field having a vertical field component of 3 to 50 Gauss and an essentially smaller horizontal component has been applied. With experiments 25, 28, 35, 37 an additional pulse signal has been superimposed to the DC current of the Al_{0.6}Cr_{0.4} (Al_{0.6}V_{0.4}) arc sources. Details of such or similar applicable oxide coating processes can be found in WO 2006-099758 and the other before-mentioned documents incorporated by reference. Layer thickness of TiN and TiCN interlayers between the substrate and a top oxidic layer was between 0.5 to 1.5 µm.

Comparative CVD coatings have been deposited with MT-CVD and deposition temperatures of 850° C.

### Example A) Milling of alloy steel AISI 4140 (DIN 1.7225)

| | |
|---|---|
| Tool: | indexable face mill, one insert z=1 |
| Tool diameter: | d = 98 mm |
| Cutting speed: | v_{c} = 152 m/min |
| Feed rate: | f_{z} = 0.25 mm/tooth |
| Depth of cut: | dc = 2.5 mm |
| Process: | down milling with coolant |
| Insert type: | Kennametal SEHW 1204 AFTN, 12 wt% Co; chamfered sharp cutting edges for PVD coating, chamfered and honed to a very slight 40 µm radius for CVD coating. |

**Table 1)**

| Exp. Nr. | Type | d [µm] | Coating layers | | | Tool life [mm of cut] |
|---|---|---|---|---|---|---|
| 1 | MTCVD | 5.0 | - | TiCN | - | 5.050±500 |
| 2 | PVD | 3.5 | - | TiCN | - | 4.300±50 |
| 3 | PVD | 3.5 | - | TiAlN | - | 4.550±80 |
| 4 | PVD | 4.0 | - | AlCrN | - | 4.600±100 |
| 5 | PVD | 4.5 | TiN | (AlCr)₂O₃ | - | 5.100±90 |
| 6 | PVD | 5.0 | TiN | TiCN | (AlCr)₂O₃ | 5.300±120 |

### Example B) Milling of alloy steel AISI 4140 (DIN 1.7225)

| | |
|---|---|
| Tool: | indexable face mill, one insert z=1 |
| Tool diameter: | d = 98 mm |
| Cutting speed: | v_{c} = 213 m/min |
| Feed rate: | f_{z} = 0.18 mm/tooth |
| Depth of cut: | dc = 2.5 mm |
| Process: | down milling, no coolant |
| Insert type: | Kennametal SEHW 1204 AFTN, 12 wt% Co; Edge preparation see example A. |

**Table 2)**

| Exp. Nr. | Type | d [µm] | Coating layers | | | Tool life [mm of cut] |
|---|---|---|---|---|---|---|
| 7 | MTCVD | 5.0 | - | TiCN | - | 9.300±800 |
| 8 | PVD | 3.5 | - | TiCN | - | 8.000±150 |
| 9 | PVD | 4.5 | TiN | (AlCr)₂O₃ | - | 10.100±90 |
| 10 | PVD | 5.0 | TiN | TiCN | (AlCr)₂O₃ | 10.300±100 |
| 11 | PVD | 3.5 | TiN | (AlV)₂O₃ | - | 8.900±50 |
| 12 | PVD | 4.0 | TiN | TiCN | (AlV)₂O₃ | 9.400±80 |

### Example C) Milling of alloy steel AISI 4140 (DIN 1.7225)

| | |
|---|---|
| Tool: | indexable face mill, one insert z=1 |
| Tool diameter: | d = 98 mm |
| Cutting speed: | v_{c} = 260 m/min |
| Feed rate: | f_{z} = 0.20 mm/tooth |
| Depth of cut: | dc = 3.125 mm |
| Process: | down milling |
| Insert type: | Kennametal SEHW 1204 AFTN, Exp.13,15,17,19 Co 6.0 weight% enriched carbide grade,10.4 weight% cubic carbides. |
| | Exp. 14,16,18,20 Co 6.0 weight% non-enr. carbide grade, 10.4 weight% cubic carbides. |
| | Edge preparation see example A. |

**Table 3)**

| Exp. Nr. | Type | d [µm] | Coating layers | | | Tool life [minutes] |
|---|---|---|---|---|---|---|
| 13 | MTCVD | 8.0 | TiN | TiCN | TiN | 12.1±2.0 |
| 14 | MTCVD | 8.0 | TiN | TiCN | TiN | 6.0±4.0 |
| 15 | PVD | 4.0 | - | TiN | - | 6.2±2.0 |
| 16 | PVD | 4.0 | - | TiN | - | 5.5±2.0 |
| 17 | PVD | 4.5 | TiN | (AlCr)₂O₃ | - | 13.3±1.5 |
| 18 | PVD | 5.0 | TiN | (AlCr)₂O₃ | - | 12.1±2.0 |
| 19 | PVD | 3.5 | TiN | TiCN | (AlV)₂O₃ | 14.6±2.0 |
| 20 | PVD | 4.0 | TiN | TiCN | (AlV)₂O₃ | 13.8±3.0 |

Example C, experiment 14 clearly shows the detrimental influence of the CVD process to non-enriched carbide grades, which is due to the mentioned process effects. On the other side, the beneficial influence of a Co-enriched surface zone shows only limited effects with PVD coatings. Advantage of PVD coatings comprising an oxidic layer is obviously as is with examples A and B.

### Example D) Turning of stainless steel AISI 430F (DIN 1.4104)

| | |
|---|---|
| Cutting speed: | v_{c} = 200 m/min |
| Feed rate: | f_{z} = 0.20 mm/tooth |
| Depth of cut: | dc = 1.0 mm |
| Process: | continous turning of outer diameter |
| Insert type: | Cermet grade, ISO VNMG 160408All, sharp cutting edges for PVD coating, chamfered and honed to a slight 60 µm radius before CVD coating. |

**Table 4)**

| Exp. Nr. | Type | d [µm] | Coating layers | | | Tool life [pieces per edge] |
|---|---|---|---|---|---|---|
| 22 | MTCVD | 8.0 | - | TiCN | - | 350±55 |
| 22 | PVD | 5.0 | - | TiN | - | 275±10 |
| 23 | PVD | 4.5 | - | (AlCr) ₂O₃ | - | 340±15 |
| 24 | PVD | 6.0 | TiN | (AlCr)₂O₃ | - | 420±25 |
| 25 | PVD | 6.5 | TiN | TiCN | (AlCr)₂O₃ | 450±30 |
| 26 | PVD | 5.5 | - | (AlV)₂O₃ | - | 360±20 |
| 27 | PVD | 7.0 | TiN | (AlV) ₂O₃ | - | 385±20 |
| 28 | PVD | 7.5 | TiN | TiCN | (AlV) ₂O₃ | 410±135 |
| 29 | PVD | 3.0 | - | (AlZr) ₂O₃ | - | 335±20 |
| 30 | PVD | 5.5 | TiN | (AlZr)₂O₃ | - | 380±30 |
| 31 | PVD | 6.0 | TiN | TiCN | (AlZr)₂O₃ | 380±25 |

Additionally to the influence of the coating type and material, there can be seen a clear beneficial influence of layer thickness with oxidic PVD coatings. Nevertheless, even most thin oxidic PVD coatings show a better performance than the thick MT-CVD-coating of experiment 22.

### Example E) Turning of grey cast iron

| | |
|---|---|
| Cutting speed: | v_{c} = 550 m/min |
| Feed rate: | f_{z} = 0.65 mm/tooth |
| Depth of cut: | dc = 5.0 mm |
| Process: | continous turning of outer diameter |
| Insert type: | Ceramic, Al₂O₃-TiC 20%, ISO RNGN 120400T, sharp cutting edges for PVD coating, chamfered and honed to a slight 50 µm radius before CVD coating. |

**Table 5)**

| Exp. Nr. | Type | d [µm] | Coating layers | | | Tool life [pieces per edge] |
|---|---|---|---|---|---|---|
| 32 | MTCVD | 8.0 | TiCN | Al₂O₃ | - | 23±5 |
| 33 | PVD | 3.5 | - | TiCN | - | 8±1 |
| 34 | PVD | 6.0 | TiN | (AlCr)₂O₃ | - | 30±2 |
| 35 | PVD | 6.5 | TiN | TiCN | (AlCr)₂O₃ | 34±3 |
| 36 | PVD | 7.0 | TiN | (AlV)₂O₃ | - | 32±3 |
| 37 | PVD | 7.5 | TiN | TiCN | (AlV)₂O₃ | 36±3 |

### Example F) Turning of forging steel _AISI 4137H (DIN 1.7225)

| | |
|---|---|
| Cutting speed: | V_{c} = 100 m/min |
| Feed rate: | f_{z} = 0.80 mm/tooth |
| Depth of cut: | dc = 5 - 15 mm |
| Process: | continous turning of outer diameter |
| Insert type: | Cemented carbide, 6% non-enriched, ISO TNMG 330924. |
| | Sharp cutting edges for PVD coating, chamfered and honed to a slight 50 µm radius before CVD coating. |

**Table 6)**

| Exp. Nr. | Type | d [µm] | Coating layers | | | Tool life [pieces per edge] |
|---|---|---|---|---|---|---|
| 32 | CVD | 8.0 | TiC | ' TiCN | TiN | 7±2 |
| 33 | PVD | 3.5 | - | TiCN | - | 3±1 |
| 34 | PVD | 6.0 | TiN | (AlCr)₂O₃ | - | 14±1 |
| 35 | PVD | 6.5 | TiN | TiCN | (AlCr)₂O₃ | 15±2 |
| 36 | PVD | 7.0 | TiN | (AlV)₂O₃ | - | 14±2 |
| 37 | PVD | 7.5 | TiN | TiCN | (AlV) ₂O₃ | 16±3 |

It could be demonstrated by examples A to F that oxidic coatings can be beneficially applied on sharp edged tools by PVD coating processes. A sharp edge is desirable because it leads to lower cutting forces, reduced tool-tip temperatures to a finer workpiece surface finish and to an essential improvement of tool life.

## Claims

1. A method for manufacturing a cutting tool, said method comprising:
- providing a cemented carbide, CBN, cermet or ceramic sintered body having a cutting edge with an edge radius Rₑ smaller than 40 µm, a flank and a rake face, and
- depositing a single layer or multilayer PVD coating on at least some parts of the cutting edge and comprising at least one oxidic layer applied by vacuum arc deposition.

2. The method according to claim 1, **characterized in that** the edge radius Rₑ is smaller than or equal 30 µm.

3. The method according to claim 1, **characterized in that** the oxidic layer comprises a cubic or a hexagonal crystal structure.

4. The method according to one of claims 1 to 3, **characterized in that** the oxidic layer comprises an (Al₁₋ₓCrₓ)₂O₃ compound.

5. The method according to one of claims 1 to 4, **characterized in that** the oxidic layer comprises a corundum type structure.

6. The method according to claim 5, **characterized in that** the corundum type structure is corundum or a multiple oxide having the following composition:
(Mel₁₋ₓMe2ₓ)₂O₃, with 0.2 ≤ x ≤ 0.98,
wherein Me1 and Me2 are different elements from the group Al, Cr, Fe, Li, Mg, Mn, Nb, Ti, Sb, V.

7. The method according to claim 5 or claim 6, **characterized in that** the corundum type structure is (AlCr)₂O₃ or (AlV)₂O₃.

8. The method according to one of claims 1 to 7, **characterized in that** the PVD coating is a multilayer.

9. The method according to claim 8, **characterized in that** the oxidic layer comprises films of different oxides.

10. The method according to claim 9, **characterized in that** the PVD coating comprises
- an adhesion layer situated directly on the sintered body surface and/or
- at least one hard wear protective layer situated between the sintered body and the oxidic layer, or between two or more consecutive oxidic layers and/or is the outermost of the PVD coating layers,
wherein the adhesion layer and the hard protective layer, respectively, preferably comprises at least one element of the group of a transition metal from group IV, V, VI of the periodic system of the elements and of Al, Si, Fe, Ni, Co, Y, La.

11. The method according to claim 10, **characterized in that** said at least one element of the wear protective layer is comprised in a compound together with N, C, O, B or with a mixture thereof, wherein N, C and CN are preferred.

12. The method according to claim 10 or 11, **characterized in that** at least one wear protective layer comprises at least one composition-segregated film.

13. The method according to one of claims 10 to 12, **characterized in that** said at least one element of the adhesion layer is comprised in a compound together with N, C, O or a mixture thereof, wherein N and 0 is preferred.

14. The method according to one of claims 10 to 13, **characterized in that** the adhesion layer has a thickness of 0.1 to 1.5 µm.

15. The method according to one of claims 10 to 14, **characterized in that** the adhesion layer comprises a thin metalic layer situated directly on the sintered body surface.

16. The method according to one of claims 1 to 15, **characterized in that** the overall coating thickness is 2 to 30 µm, preferably 3 to 10 µm.

17. The method according to one of claims 1 to 16, **characterized in that** the coating thickness of the flank face is different from the coating thickness of the rake face.

18. The method according to one of claims 10 to 15, **characterized in that** the tool is a gear cutting tool or a hob or a shank type tool, having the oxidic layer as the outermost layer of the coating system.

19. The method according to claim 18, **characterized in that** the wear protective layer is a TiN, TiC or TiCN, a TiAlN or TiAlCN, an AlCrN or AlCrCN type layer, and is situated between the sintered body and the oxidic layer.

## Patentansprüche

1. Verfahren zum Herstellen eines Schneidwerkzeugs, wobei das Verfahren enthält:
- Bereitstellen von einem Hartmetall, CBN, Cermet- oder Keramik-Sinterkörper mit einer Schneidkante mit einem Kantenradius Rₑ von weniger als 40 µm, einer Flanken- und einer Neigungsfläche, und
- Ablagern einer einlagigen oder mehrlagigen PVD Beschichtung auf zumindest einigen Abschnitten der Schneidkante, und umfassend zumindest eine Oxidschicht, welche durch Vakuum-Lichtbogen-Beschichtung angelegt ist.

2. Verfahren nach Anspruch 1, **dadurch gekennzeichnet, dass** der Kantenradius Rₑ kleiner oder gleich 30 µm ist.

3. Verfahren nach Anspruch 1, **dadurch gekennzeichnet, dass** die Oxidschicht eine kubische oder eine hexagonale Kristallstruktur hat.

4. Verfahren nach einem der Ansprüche 1 bis 3, **dadurch gekennzeichnet, dass** die Oxidschicht eine (Al₁-ₓCrₓ)₂O₃ Verbindung enthält.

5. Verfahren nach einem der Ansprüche 1 bis 4, **dadurch gekennzeichnet, dass** die Oxidschicht eine korundartige Struktur aufweist.

6. Verfahren nach Anspruch 5, **dadurch gekennzeichnet, dass** die korundartige Struktur Korund oder ein Mehrfach-Oxid mit der folgenden Zusammensetzung ist:
(Mel₁-ₓMe2ₓ) ₂O₃, mit 0,2 ≤ x ≤ 0,98,
wobei Me1 und Me2 unterschiedliche Elemente sind aus der Gruppe von Al, Cr, Fe, Li, Mg, Mn, Nb, Ti, Sb, V.

7. Verfahren nach Anspruch 5 oder 6, **dadurch gekennzeichnet, dass** die korundartige Struktur (AlCr)₂O₃ oder (AlV)₂O₃ ist.

8. Verfahren nach einem der Ansprüche 1 bis 7, **dadurch gekennzeichnet, dass** die PVD Beschichtung mehrschichtig ist.

9. Verfahren nach Anspruch 8, **dadurch gekennzeichnet, dass** die Oxidschicht Filme unterschiedlicher Oxide enthält.

10. Verfahren nach Anspruch 9, **dadurch gekennzeichnet, dass** die PVD Beschichtung enthält:
- eine Haftschicht, welche sich direkt auf der Fläche des Sinterkörpers befindet, und/oder
- zumindest eine harte Verschleissschutzschicht, welche sich zwischen dem Sinterkörper und der Oxidschicht oder zwischen zwei oder mehreren aufeinanderfolgenden Oxidschichten befindet und/oder die äusserste der PVD Beschichtungsschichten ist,
wobei die Haftschicht und die harte Schutzschicht jeweils vorzugsweise zumindest ein Element aus der Gruppe von einem Übergangsmetall aus der Gruppe IV, V, VI des Periodensystems der Elemente und Al, Si, Fe, Ni, Co, Y, La enthalten.

11. Verfahren nach Anspruch 10, **dadurch gekennzeichnet, dass** das zumindest eine Element der Verschleissschutzschicht in einer Verbindung zusammen mit N, C, O, B oder mit einer Mischung hiervon umfasst ist, wobei N, C und CN bevorzugt sind.

12. Verfahren nach Anspruch 10 oder 11, **dadurch gekennzeichnet, dass** zumindest eine Verschleissschutzschicht zumindest einen Film einer getrennten Zusammensetzung enthält.

13. Verfahren nach eine der Ansprüche 10 bis 12, **dadurch gekennzeichnet, dass** das zumindest eine Element der Haftschicht in einer Verbindung zusammen mit N, C, O oder einer Mischung hiervon enthalten ist, wobei N und O bevorzugt sind.

14. Verfahren nach einem der Ansprüche 10 bis 13, **dadurch gekennzeichnet, dass** die Haftschicht eine Dicke von 0,1 bis 1,5 µm hat.

15. Verfahren nach einem der Ansprüche 10 bis 14, **dadurch gekennzeichnet, dass** die Haftschicht eine dünne Metallschicht enthält, welche sich direkt auf der Fläche des Sinterkörpers befindet.

16. Verfahren nach einem der Ansprüche 1 bis 15, **dadurch gekennzeichnet, dass** die gesamte Beschichtungsdicke 2 bis 30 µm, bevorzugt 3 bis 10 µm beträgt.

17. Verfahren nach einem der Ansprüche 1 bis 16, **dadurch gekennzeichnet, dass** sich die Beschichtungsdicke der Flankenfläche von der Beschichtungsdicke der Neigungsfläche unterscheidet.

18. Verfahren nach einem der Ansprüche 10 bis 15, **dadurch gekennzeichnet, dass** das Werkzeug ein Zahnrad-Schneidwerkzeug oder ein Walzfräser oder ein Schaftwerkzeug ist, welches die Oxidschicht als äusserste Schicht des Beschichtungssystems hat.

19. Verfahren nach Anspruch 18, **dadurch gekennzeichnet, dass** die Verschleissschutzschicht eine Schicht ist vom Typ TiN, TiC oder TiCN, TiAlN oder TiAlCN, AlCrN oder AlCrCN, und sich zwischen dem Sinterkörper und der Oxidschicht befindet.

## Revendications

1. Procédé de fabrication d'un outil de coupe, ledit procédé consistant à :
- fournir un corps fritté en carbure cémenté, nitrure de bore cubique, cermet ou matériau céramique ayant une arête coupante avec un rayon d'arête Rₑ inférieur à 40 µm, une face de dépouille et une face de coupe, et
- déposer un revêtement PVD à une couche ou multicouches sur au moins certaines parties de l'arête coupante et comprenant au moins une couche oxydique appliquée par dépôt par arc sous vide.

2. Procédé selon la revendication 1, **caractérisé en ce que** le rayon d'arête Rₑ est inférieur ou égal à 30 µm.

3. Procédé selon la revendication 1, **caractérisé en ce que** la couche oxydique comprend une structure cristalline cubique ou hexagonale.

4. Procédé selon l'une des revendications 1 à 3, **caractérisé en ce que** la couche oxydique comprend un composé (Al₁-ₓCrₓ)₂O₃.

5. Procédé selon l'une des revendications 1 à 4, **caractérisé en ce que** la couche oxydique comprend une structure de type corindon.

6. Procédé selon la revendication 5, **caractérisé en ce que** la structure type corindon est du corindon ou un oxyde multiple ayant la composition suivante :
(Me1₁-ₓMe2ₓ)₂O₃, avec 0,2 ≤ x ≤ 0,98,
où Me1 et Me2 sont des éléments différents du groupe Al, Cr, Fe, Li, Mg, Mn, Nb, Ti, Sb, V.

7. Procédé selon la revendication 5 ou 6, **caractérisé en ce que** la structure type corindon est (AlCr)₂O₃ ou (AlV)₂O₃.

8. Procédé selon l'une des revendications 1 à 7, **caractérisé en ce que** le revêtement PVD est multicouches.

9. Procédé selon la revendication 8, **caractérisé en ce que** la couche oxydique comprend des films de différents oxydes.

10. Procédé selon la revendication 9, **caractérisé en ce que** le revêtement PVD comprend
- une couche d'adhérence située directement sur la surface du corps fritté et/ou
- au moins une couche de protection rigide anti-usure située entre le corps fritté et la couche oxydique, ou entre deux couches oxydiques consécutives ou plus et/ou qui est la plus à l'extérieur des couches de revêtement PVD,
dans lequel la couche d'adhérence et la couche de protection rigide, respectivement, comprennent de préférence au moins un élément du groupe d'un métal de transition de groupe IV, V, VI du système périodique des éléments et de Al, Si, Fe, Ni, Co, Y, La.

11. Procédé selon la revendication 10, **caractérisé en ce que** ledit au moins un élément de la couche de protection anti-usure est compris dans un composé avec N, C, O, B ou avec un mélange de ces derniers, N, C et CN étant préférés.

12. Procédé selon la revendication 10 ou 11, **caractérisé en ce qu'**au moins une couche de protection anti-usure comprend au moins un film séparé selon la composition.

13. Procédé selon l'une des revendications 10 à 12, **caractérisé en ce que** ledit au moins un élément de la couche d'adhérence est compris dans un composé avec N, C, O ou un mélange de ces derniers, N et O étant préférés.

14. Procédé selon l'une des revendications 10 à 13, **caractérisé en ce que** la couche d'adhérence présente une épaisseur de 0,1 à 1,5 µm.

15. Procédé selon l'une des revendications 10 à 14, **caractérisé en ce que** la couche d'adhérence comprend une fine couche métallique située directement sur la surface du corps fritté.

16. Procédé selon l'une des revendications 1 à 15, **caractérisé en ce que** l'épaisseur totale de revêtement est comprise entre 2 et 30 µm, de préférence entre 3 et 10 µm.

17. Procédé selon l'une des revendications 1 à 16, **caractérisé en ce que** l'épaisseur de revêtement de la face de dépouille est différente de l'épaisseur de revêtement de la face de coupe.

18. Procédé selon l'une des revendications 10 à 15, **caractérisé en ce que** l'outil est un outil de coupe pour engrenages ou une fraise à tailler ou un outil de type queue de foret, ayant la couche oxydique comme couche la plus à l'extérieur du système de revêtement.

19. Procédé selon la revendication 18, **caractérisé en ce que** la couche de protection anti-usure est un TiN, TiC ou TiCN, un TiAIN ou TiAICN, une couche de type AlCrN ou AlCrCN, et est située entre le corps fritté et la couche oxydique.
